(19) Europäisches Patentamt
European Patent Office
Office européen des brevets

(11) **EP 2 565 165 B1**

(12) **EUROPEAN PATENT SPECIFICATION**

(45) Date of publication and mention of the grant of the patent:
**03.08.2016 Bulletin 2016/31**

(51) Int Cl.:
***C02F 1/68*** *(2006.01)* *C02F 103/42* *(2006.01)*

(21) Application number: **11179541.5**

(22) Date of filing: **31.08.2011**

(54) **Remineralization of desalinated and of fresh water by dosing of a calcium carbonate solution in soft water**

Remineralisierung aus entsalztem und Süßwasser durch Dosieren einer Calcium-Carbonat-Lösung in weichem Wasser

Reminéralisation d'eau dessalée et douce en dosant une solution de carbonate de calcium dans l'eau douce

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(43) Date of publication of application:
**06.03.2013 Bulletin 2013/10**

(73) Proprietor: **Omya International AG**
**4665 Oftringen (CH)**

(72) Inventors:
- **Poffet, Martine**
  **4600 Olten (CH)**
- **Skovby, Michael**
  **8706 Meilen (CH)**
- **Pohl, Michael**
  **9500 Villach (AT)**

(74) Representative: **Glas, Holger**
**Maiwald Patentanwalts GmbH**
**Elisenhof**
**Elisenstrasse 3**
**80335 München (DE)**

(56) References cited:

| | |
|---|---|
| **EP-A1- 0 520 826** | **EP-A2- 1 741 679** |
| **WO-A1-2010/012691** | **WO-A2-2010/131251** |
| **CH-A- 183 694** | **DE-A1- 1 955 571** |
| **KR-B1- 100 990 486** | **US-A- 5 914 046** |
| **US-A1- 2010 084 346** | **US-B2- 7 374 694** |

- **Robert C. Weast: "69th Edition, 1988-1989, CRC Handbook of Chemistry and Physics", 1988, CRC Press, Inc., Boca Raton, Florida, XP002661543, * pages B-79 and B-207 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to the field of water treatment, and more specifically to a process for remineralization of water and the use of calcium carbonate in such a process.

Drinking water has become scarce. Even in countries that are rich in water, not all sources and reservoirs are suitable for the production of drinking water, and many sources of today are threatened by a dramatic deterioration of the water quality. Initially feed water used for drinking purposes was mainly surface water and groundwater. However the treatment of seawater, brine, brackish waters, waste waters and contaminated effluent waters is gaining more and more importance for environmental and economic reasons.

In order to recover water from seawater or brackish water, for potable usages, several processes are known, which are of considerable importance for dry areas, coastal regions and sea islands, and such processes comprise distillation, electrolytic as well as osmotic or reverse osmotic processes. The water obtained by such processes is very soft and has a low pH value because of the lack of pH-buffering salts, and thus, tends to be highly reactive and, unless treated, it can create severe corrosion difficulties during its transport in conventional pipelines. Furthermore, untreated desalinated water cannot be used directly as a source of drinking water. To prevent the dissolution of undesirable substances in pipeline systems, to avoid the corrosion of water works such as pipes and valves and to make the water palatable, it is necessary to remineralize the water.

Conventional processes that are mainly used for the remineralization of water are lime dissolution by carbon dioxide and limestone bed filtration. Other, less common remineralization processes, comprise, e.g., the addition of hydrated lime and sodium carbonate, the addition of calcium sulfate and sodium bicarbonate, or the addition of calcium chloride and sodium bicarbonate.

The lime process involves treatment of lime solution with $CO_2$ acidified water, wherein the following reaction is involved:

$$Ca(OH)_2 + 2\,CO_2 \rightarrow Ca^{2+} + 2\ HCO_3^-$$

As can be gathered from the above reaction scheme, two equivalents of $CO_2$ are necessary to convert one equivalent of $Ca(OH)_2$ into $Ca^{2+}$ and bicarbonate for remineralization. This method is dependent on the addition of two equivalents of $CO_2$, in order to convert the alkaline hydroxide ions into the buffering species $HCO_3^-$ . For the remineralization of water, a saturated calcium hydroxide solution, commonly named lime water, of 0.1-0.2 wt.-%, based on the total weight, is prepared from a lime milk (usually at most 5 wt.-%). Therefore, a saturator to produce the lime water must be used and large volumes of lime water are necessary to achieve the target level of remineralization. A further drawback of this method is that hydrated lime is corrosive and requires appropriate handling and specific equipment. Furthermore, a poorly controlled addition of hydrated lime to the soft water can lead to unwanted pH shifts due to the absence of buffering properties of lime.

The limestone bed filtration process comprises the step of passing the soft water through a bed of granular limestone dissolving the calcium carbonate in the water flow. Contacting limestone with $CO_2$ acidified water mineralizes the water according to:

$$CaCO_3 + CO_2 + H_2O \rightarrow Ca^{2+} + 2\ HCO_3^-$$

Unlike the lime process, only one equivalent of $CO_2$ is stoichiometrically necessary to convert one equivalent of $CaCO_3$ into $Ca^{2+}$ and bicarbonate for remineralization. Moreover, limestone is not corrosive and due to the buffering properties of $CaCO_3$ major pH shifts are prevented.

One additional advantage of the use of calcium carbonate compared to lime it its very low carbon dioxide footprint. In order to produce one tonne of calcium carbonate 75 kg of $CO_2$ is emitted, whereas 750 kg of $CO_2$ is emitted for the production of one tonne of time. Therefore, the use of calcium carbonate instead of lime presents some environmental benefits.

The dissolution rate of granular calcium carbonate, however, is slow and filters are required for this process. This induces a sizeable footprint of these filters and large plant surfaces are required for the limestone bed filtration systems.

Methods for remineralization of water using lime milk or a slurry of lime are described in US 7,374,694 and EP 0 520 826. US 5,914,046 describes a method for reducing the acidity in effluent discharges using a pulsed limestone bed.

Thus, considering the drawbacks of the known processes for remineralization of water, it is an object of the

present invention to provide an alternative or improved process for remineralization of water.

Another object of the present invention is to provide a process for remineralization of water that does not require a corrosive compound, and thus, avoids the danger of incrustation, eliminates the need for corrosion resistant equipment, and provides a safe environment for people working in the plant It would also be desirable to provide a process that is environmental friendly and requires low amounts of carbon dioxide when compared to today's water remineralization with lime processes.

Another object of the present invention is to provide a process for remineralization of water, wherein the amount of minerals can be adjusted to the required values.

Another object of the present invention is to provide a process for remineralization using limestone that allows the use of smaller remineralization units, or to provide a remineralization process that allows the use of smaller volumes of the remineralization compound, for instance, in comparison with the lime process. It would also be desirable to provide a process that can be operated on smaller plant surfaces than the limestone bed filtration process.

While the Applicant knows as a solution the published European Patent Application Number EP241817 describing a method for the remineralization of desalinated and fresh water by injecting a micronized calcium carbonate slurry, the foregoing and other objects are solved by the provision of a process according to claim 1 for remineralization of water comprising the steps of (a) providing feed water, (b) providing an aqueous solution of calcium carbonate, wherein the solution of calcium carbonate comprises dissolved calcium carbonate and reaction species thereof, and (c) combining the feed water of step (a) and the aqueous solution of calcium carbonate of step (b).

According to another aspect of the present invention, a use of an aqueous solution of calcium carbonate comprising dissolved calcium carbonate and reaction species thereof for the remineralization of water is provided.

Advantageous embodiments of the present invention are defined in the corresponding sub-claims.

According to the invention the concentration of calcium carbonate in the solution is from 0.1 to 1 g/L, preferably from 0.3 to 0.8 g/L, and more preferably from 0.5 to 0.7 g/L, based on the total weight of the solution.

According to the invention the calcium carbonate used for the preparation of the aqueous solution of calcium carbonate in step b) has a weight median particle size $d_{50}$ from 0.1 to 100 μm, preferably from 0.5 to 50 μm, from 1 to 15 μm, from 2 to 10 μm, most preferably 3 to 5 μm, or the calcium carbonate has a weight median particle size $d_{50}$ from 1 to 50 μm, from 2 to 20 μm, preferably from 5 to 15 μm, and most preferably from 8 to 12 μm. The calcium carbonate particles may be obtained by techniques based on friction, e.g., milling or grinding either under wet or dry conditions. However, it is also possible to produce the calcium carbonate particles by any other suitable method, e.g., by precipitation, rapid expansion of supercritical solutions, spray drying, classification or fractionation of natural occurring sands or muds, filtration of water, sol-gel processes, spray reaction synthesis, flame synthesis, or liquid foam synthesis.

According to the present invention the aqueous solution of calcium carbonate of step b) has been prepared by one of the following steps:

A) preparing an aqueous suspension of calcium carbonate in a first step, and introducing either: (i) a carbon dioxide generating compound, (ii) a carbon dioxide generating compound and an acid, or (iii) an acid to an aqueous suspension of calcium carbonate in a second step, or

B) introducing in a first step either: (i) a carbon dioxide generating compound, (ii) a carbon dioxide generating compound and an acid, or (iii) an acid in the water to be used for the preparation of the solution of calcium carbonate, and then introducing calcium carbonate, either in dry form or as a suspension in a second step in the water, or

C) introducing a suspension of calcium carbonate and either: (i) a carbon dioxide generating compound, (ii) a carbon dioxide generating compound and an acid, or (iii) an acid simultaneously.

For the purpose of the present invention, the term "carbon dioxide generating compound" encompasses gaseous carbon dioxide, liquid carbon dioxide, solid carbon dioxide, a gas containing carbon dioxide, i.e. a mixture of at least one gas and carbon dioxide, as well as compounds releasing carbon dioxide upon thermal or chemical treatment. Preferably the carbon dioxide generating compound is a gaseous mixture of carbon dioxide and other gases such as carbon dioxide containing flue gases exhausted from industrial processes like combustion processes or calcination processes or alike, or the carbon dioxide generating compound is gaseous carbon dioxide. When a gaseous mixture of carbon dioxide and other gases is used, then the carbon dioxide is present in the range of 8 to about 99% by volume, and preferably in the range of 10 to 25% by volume, for example 20% by volume.

The acid used in the present invention is preferably an acid selected from the group consisting of sulphuric acid, hydrochloric acid, sulphurous acid, phosphoric acid, and is preferably sulphuric acid or phosphoric acid.

According to still another embodiment the calcium carbonate has an HCl insoluble content from 0.02 to 2.5 wt.-%, 0.05 to 1.5 wt.-%, or 0.1 to 0.6 wt.-% based on the total weight of the calcium carbonate. According to still another embodiment the calcium carbonate is a ground calcium carbonate, precipitated calcium carbonate, or mixtures thereof.

According to one embodiment the solution of step b) comprises further minerals containing magnesium, potassium or sodium, preferably magnesium carbonate, calcium magnesium carbonate, e.g. dolomitic limestone, calcareous dolomite or half burnt dolomite, magnesium oxide such as burnt dolomite, magnesium sulfate, potassium hydrogen carbonate, or sodium hydrogen carbonate.

According to another embodiment the solution of step b) is freshly prepared before the use in step b). According to still another embodiment the time period between the preparation of the solution of step b) and combining the feed water of step a) and the solution of step b) in step c) is less than 48 hours, less than 24 hours, less than 12 hours, less than 5 hours, less than 2 hours or less than 1 hour. According to still another embodiment the solution of step b) meets microbiological quality requirements specified by the national guidelines for drinking water.

According to one embodiment the obtained remineralized water has a calcium concentration as calcium carbonate from 15 to 200 mg/L, preferably from 30 to 150 mg/L, and most preferably from 100 to 125 mg/L, or from 15 to 100 mg/L, preferably from 20 to 80 mg/L, and most preferably from 40 to 60 mg/L.

According to another embodiment the obtained remineralized water has a magnesium concentration from 5 to 25 mg/ L, preferably from 5 to 15 mg/ L, and most preferred from 8 to 12 mg/1 L. According to still another embodiment the remineralized water has a turbidity value of lower than 5.0 NTU, lower than 1.0 NTU, lower than 0.5 NTU, or lower than 0.3 NTU. According to still another embodiment the remineralized water has a Langelier Saturation Index from -1 to 2, preferably from -0.5 to 0.5, most preferred from -0.2 to 0.2. According to still another embodiment the remineralized water has a Silt Density Index $SDI_{15}$ below 5, preferably below 4, and most preferred below 3. According to still another embodiment the remineralized water has a Membrane Fouling Index $MFI_{0.45}$ below 4, preferably below 2.5, most preferred below 2.

According to one embodiment the feed water is desalinated seawater, brackish water or brine, treated wastewater or natural water such as ground water, surface water or rainfall.

According to one embodiment the remineralized water is blended with feed water. According to another embodiment the process further comprises a particle removal step.

According to one embodiment the process further comprises the steps of (d) measuring a parameter value of the remineralized water, wherein the parameter is selected from the group comprising alkalinity, total hardness, conductivity, calcium concentration, pH, $CO_2$ concentration, total dissolved solids, and turbidity of the remineralized water, (e) comparing the measured parameter value with a predetermined parameter value, and (f) providing the amount of solution of calcium carbonate on the basis of the difference between the measured and the predetermined parameter value. According to another embodiment the predetermined parameter value is a pH value, wherein the pH value is from 5.5 to 9, preferably from 7 to 8.5.

According to one embodiment the micronized calcium carbonate is used for remineralization of water, wherein the remineralized water is selected from drinking water, recreation water such as water for swimming pools, industrial water for process applications, irrigation water, or water for aquifer or well recharge.

"Dissolved calcium carbonate and reaction species" in the meaning of the present invention is understood to encompass the following substances and ions: calcium carbonate ($CaCO_3$), calcium ions ($Ca^{2+}$), bicarbonate ions ($HCO_3^-$), carbonate ions ($CO_3^{2-}$), carbonic acid ($H_2CO_3$) as well as dissolved $CO_2$, depending on the amount of $CO_2$ dissolved at equilibrium conditions.

The term "alkalinity (TAC)" as used in the present invention is a measure of the ability of a solution to neutralize acids to the equivalence point of carbonate or bicarbonate. The alkalinity is equal to the stoichiometric sum of the bases in solution and is specified in mg/L as $CaCO_3$. The alkalinity may be measured with a titrator.

For the purpose of the present invention the term "calcium concentration" refers to the total calcium content in the solution and is specified in mg/l as $Ca^{2+}$ or as $CaCO_3$. The concentration may be measured with a titrator.

"Conductivity" in the meaning of the present invention is used as an indicator of how salt-free, ion-free, or impurity-free the measured water is; the purer the water, the lower the conductivity. The conductivity can be measured with a conductivity meter and is specified in S/m.

"Ground calcium carbonate (GCC)" in the meaning of the present invention is a calcium carbonate obtained from natural sources including marble, chalk or limestone or dolomite. Calcite is a carbonate mineral and the most stable polymorph of calcium carbonate. The other polymorphs of calcium carbonate are the minerals aragonite and vaterite. Aragonite will change to calcite at 380-470°C, and vaterite is even less stable. Ground calcium carbonate processed through a treatment such as grinding, screening and/or fractionizing by wet and/or dry, for example, by a cyclone. It is known to the skilled person that ground calcium carbonate can inherently contain a defined concentration of magnesium, such as it is the case for dolomitic limestone.

The term "Langelier Saturation Index (LSI)" as used in the present invention describes the tendency of an aqueous liquid to be scale-forming or corrosive, with a positive LSI indicating scale-forming tendencies and a negative LSI indicating a corrosive character. A balanced Langelier Saturation Index, i.e. LSI=0, therefore means that the aqueous liquid is in chemical balance. The LSI is calculated as follows:

$$LSI = pH - pH_s,$$

wherein pH is the actual pH value of the aqueous liquid and $pH_s$ is the pH value of the aqueous liquid at $CaCO_3$ saturation. The $pH_s$ can be estimated as follows:

$$pH_s = (9.3 + A + B) - (C + D),$$

wherein A is the numerical value indicator of total dissolved solids (TDS) present in the aqueous liquid, B is the numerical value indicator of temperature of the aqueous liquid in K, C is the numerical value indicator of the calcium concentration of the aqueous liquid in mg/l of $CaCO_3$, and D is the numerical value indicator of alkalinity of the aqueous liquid in mg/l of $CaCO_3$. The parameters A to D are determined using the following equations:

$$A = (\log_{10}(TDS) - 1)/10,$$

$$B = -13.12 \times \log_{10}(T + 273) + 34.55,$$

$$C = \log_{10}[Ca^{2+}] - 0.4,$$

$$D = \log_{10}(TAC),$$

wherein TDS are the total dissolved solids in mg/l, T is the temperature in °C, $[Ca^{2+}]$ is the calcium concentration of the aqueous liquid in mg/l of $CaCO_3$, and TAC is the alkalinity of the aqueous liquid in mg/L of $CaCO_3$.

The term "Silt Density Index (SDI)" as used in the present invention refers to the quantity of particulate matter in water and correlates with the fouling tendency of reverse osmosis or nanofiltration systems. The SDI can be calculated, e.g., from the rate of plugging of a 0.45 μm membrane filter when water is passed through at a constant applied water pressure of 208.6 kPa. The $SDI_{15}$ value is calculated from the rate of plugging of a 0.45 μm membrane filter when water is passed through at a constant applied water pressure of 208.6 kPa during 15 min. Typically, spiral wound reverse osmosis systems will need an SDI less than 5, and hollow fiber reverse osmosis systems will need an SDI less than 3.

The term "Modified Fouling Index (MFI)" as used in the present invention refers to the concentration of suspended matter and is a more accurate index than the SDI for predicting the tendency of a water to foul reverse osmosis or nanofiltration membranes. The method that can be used for determining the MFI may be the same as for the SDI except that the volume is recorded every 30 seconds over a 15 minute filtration period. The MFI can be obtained graphically as the slope of the straight part of the curve when t/V is plotted against V (t is the time in seconds to collect a volume of V in liters). An MFI value of <1 corresponds to an SDI value of about <3 and can be considered as sufficiently low to control colloidal and particulate fouling.

In case an ultrafiltration (UF) membrane is used for MFI measurements, the index is called MFI-UF in contrast to the $MFI_{0.45}$ where a 0.45 μm membrane filter is used.

For the purpose of the present invention, the term "micronized" refers to a particle size in the micrometer range, e.g., a particle size from 0.1 to 100 μm. The micronized particles may be obtained by techniques based on friction, e.g., milling or grinding either under wet or dry conditions. However, it is also possible to produce the micronized particles by any other suitable method, e.g., by precipitation, rapid expansion of supercritical solutions, spray drying, classification or fractionation of natural occurring sands or muds, filtration of water, sol-gel processes, spray reaction synthesis, flame synthesis, or liquid foam synthesis.

Throughout the present document, the "particle size" of a calcium carbonate product is described by its distribution of particle sizes. The value $d_x$ represents the diameter relative to which x % by weight of the particles have diameters less than $d_x$. This means that the $d_{20}$ value is the particle size at which 20 wt.-% of all particles are smaller, and the $d_{75}$ value is the particle size at which 75 wt.-% of all particles are smaller. The $d_{50}$ value is thus the weight median particle size, i.e. 50 wt.-% of all grains are bigger or smaller than this particle size. For the purpose of the present invention the particle size is specified as weight median particle size $d_{50}$ unless indicated otherwise. For determining

the weight median particle size $d_{50}$ value for particles having a $d_{50}$ greater than 0.5 μm, a Sedigraph 5100 device from the company Micromeritics, USA can be used.

"Precipitated calcium carbonate (PCC)" in the meaning of the present invention is a synthesized material, generally obtained by precipitation following the reaction of carbon dioxide and lime in an aqueous environment or by precipitation of a calcium and carbonate source in water or by precipitation of calcium and carbonate ions, for example $CaCl_2$ and $Na_2CO_3$, out of solution. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like forms.

For the purpose of the present invention, a "slurry" comprises insoluble solids and water and optionally further additives and usually contains large amounts of solids and, thus, is more viscous and generally of higher density than the liquid from which it is formed.

The term "remineralization" as used in the present invention refers to the restoration of minerals in water not containing minerals at all, or in an insufficient amount, in order to obtain a water that is palatable. A remineralization can be achieved by adding at least calcium carbonate to the water to be treated. Optionally, e.g., for health-related benefits to ensure the appropriate intake of some essential minerals and trace elements, further substances may be mixed into or with the calcium carbonate and then added to the water during the remineralization process. According to the national guidelines on human health and drinking water quality, the remineralized product may comprise additional minerals containing magnesium, potassium or sodium, e.g., magnesium carbonate, magnesium sulfate, potassium hydrogen carbonate, sodium hydrogen carbonate or other minerals containing essential trace elements.

For the purpose of the present invention, a solution of calcium carbonate means a clear solution of calcium carbonate in a solvent, where all or nearly all of the $CaCO_3$ has been dissolved in the solvent so as to form a visually clear solution. The solvent is preferably water.

The term "total dissolved solids (TDS)" as used in the present invention is a measure of the combined content of all inorganic and organic substances contained in a liquid in molecular, ionized or micro-granular (colloidal sol) suspended form. Generally the operational definition is that the solids must be small enough to survive filtration through a sieve having an aperture size of two micrometers. The total dissolved solids can be estimated with a conductivity meter and are specified in mg/L.

"Turbidity" in the meaning of the present invention describes the cloudiness or haziness of a fluid caused by individual particles (suspended solids) that are generally invisible to the naked eye. The measurement of turbidity is a key test of water quality and can be carried out with a nephelometer. The units of turbidity from a calibrated nephelometer as used in the present invention are specified as Nephelometric Turbidity Units (NTU).

The inventive process for remineralization of water comprises the steps of (a) providing feed water, (b) providing an aqueous solution of calcium carbonate, wherein the aqueous solution of calcium carbonate comprises dissolved calcium carbonate and reaction species thereof, and (c) combining the feed water of step a) and the aqueous calcium carbonate solution of step b).

The feed water to be is used in the inventive process can be derived from various sources. The feed water preferably treated by the process of the present invention is desalinated seawater, brackish water or brine, treated wastewater or natural water such as ground water, surface water or rainfall.

According to one embodiment of the present invention, the feed water can be pretreated. A pretreatment may be necessary, e.g., in case the feed water is derived from surface water, groundwater or rainwater. For example, to achieve the drinking water guidelines the water need to be treated through the use of chemical or physical techniques in order to remove pollutants such as organics and undesirable minerals. For example, ozonation can be used as a first pretreatment step, followed then by coagulation, flocculation, or decantation as a second treatment step. For example, iron(III) salts such as $FeClSO_4$ or $FeCl_3$, or aluminum salts such as $AlCl_3$, $Al_2(SO_4)_3$ or polyaluminium may used as flocculation agents. The flocculated materials can be removed from the feed water, e.g, by means of sand filters or multi-layered filters. Further water purification processes that may be used to pretreat the feed water are described, e.g., in EP 1 975 310, EP 1 982 759, EP 1 974 807, orEP 1 974 806.

According to another exemplary embodiment of the present invention, sea water or brackish water is firstly pumped out of the sea by open ocean intakes or subsurface intakes such as wells, and then it undergoes physical pretreatments such as screening, sedimendation or sand removal processes. Depending on the required water quality, additional treatment steps such as coagulation and flocculation may be necessary in order to reduce potential fouling on the membranes. The pretreated seawater or brackish water may then be distilled, e.g., using multiple stage flash, multiple effect distillation, or membrane filtration such as ultrafiltration or reverse osmosis, to remove the remaining particulates and dissolved substances.

The aqueous solution of calcium carbonate of step b) has preferably been prepared by one of the following steps:

A) preparing an aqueous suspension of calcium carbonate in a first step, and introducing either: (i) a carbon dioxide generating compound, (ii) a carbon dioxide generating compound and an acid, or (iii) an acid to an aqueous suspension of calcium carbonate in a second step, or

B) introducing in a first step either: (i) a carbon dioxide generating compound, (ii) a carbon dioxide generating compound and an acid, or (iii) an acid in the water to be used for the preparation of the solution of calcium carbonate, and then introducing calcium carbonate, either in dry form or as a suspension in a second step in the water, or

C) introducing a suspension of calcium carbonate and either: (i) a carbon dioxide generating compound, (ii) a carbon dioxide generating compound and an acid, or (iii) an acid simultaneously.

The carbon dioxide generating compound used is selected from among gaseous carbon dioxide, liquid carbon dioxide, solid carbon dioxide and a gas containing carbon dioxide, and preferably the carbon dioxide generating compound is a gaseous mixture of carbon dioxide and other gases such as carbon dioxide containing flue gases exhausted from industrial processes like combustion processes or calcination processes or alike, or the carbon dioxide generating compound is gaseous carbon dioxide. When a gaseous mixture of carbon dioxide and other gases is used, then the carbon dioxide is present in the range of 8 to about 99% by volume, and preferably in the range of 10 to 25% by volume, for example 20% by volume.

The gaseous carbon dioxide may be obtained from a storage tank, in which it is held in the liquid phase. Depending on the consumption rate of carbon dioxide and the environment either cryogenic or conventionally insulated tanks may be used. The conversion of the liquid carbon dioxide into the gaseous carbon dioxide can be done using an air heated vaporizer, or an electrical or steam based vaporizing system. If necessary, the pressure of the gaseous carbon dioxide can be reduced prior to the injection step, e.g., by using a pressure reducing valve.

The gaseous carbon dioxide can be injected into a stream of feed water at a controlled rate, forming a dispersion of carbon dioxide bubbles in the stream and allowing the bubbles to dissolve therein. For example, the dissolution of carbon dioxide in the feed water can be facilitated by providing the feed water stream at a flow rate of 40-60 mg/l according to the starting $CO_2$ concentration in the permeate/distillate, the final target pH value (excess $CO_2$) and final target calcium concentration (added $CaCO_3$).

According to an exemplary embodiment, the carbon dioxide is introduced into the water used for the preparation of the solution of calcium carbonate at a turbulent region of the water, wherein the turbulence can be created, e.g., by a restriction in the pipeline. For example, the carbon dioxide may be introduced into the throat of a venturi disposed in the pipeline. The narrowing of the cross sectional area of the pipeline at the throat of the venturi creates turbulent flow of sufficient energy to break up the carbon dioxide into relatively small bubbles and thereby facilitate its dissolution. According to one embodiment, the carbon dioxide is introduced under pressure into the stream of water. According to another embodiment of the present invention, the dissolution of carbon dioxide in the water used for the preparation of the solution of calcium carbonate is facilitated by a static mixer.

A flow control valve or other means may be used to control the rate of flow of carbon dioxide into the water used for the preparation of the calcium carbonate solution. For example, a $CO_2$ dosing block and a $CO_2$ in-line measuring device may be used to control the rate of the $CO_2$ flow. According to one exemplary embodiment of the invention, the $CO_2$ is injected using a combined unit comprising a $CO_2$ dosing unit, a static mixer and an in-line $CO_2$ measuring device.

The carbon dioxide acidifies the feed water by forming carbonic acid. The amount of carbon dioxide that is injected into the feed water will depend on the amount of carbon dioxide that is already present in the feed water. The amount of carbon dioxide that is already present in feed water, in turn, will depend, e.g., on the treatment up-stream of the feed water. Feed water, for example, that has been desalinated by flash evaporation will contain another amount of carbon dioxide, and thus another pH, than feed water that has been desalinated by reverse osmosis. Feed water, for example, that has been desalinated by reverse osmosis may have a pH of about 5.3 and an amount of $CO_2$ of about 1.5 mg/l.

The remineralization of the feed water is induced by injecting the solution of calcium carbonate comprising the dissolved calcium carbonate and reaction species thereof into the feed water.

The solution of calcium carbonate that is injected into the feed water comprises dissolved calcium carbonate. According to one embodiment the concentration of calcium carbonate in the solution is from 15 to 200 mg/L, preferably from 30 to 150 mg/L, and most preferably from 100 to 125 mg/L, or from 15 to 100 mg/L, preferably from 20 to 80 mg/L, and most preferably from 40 to 60 mg/L.

The calcium carbonate used for the preparation of the aqueous solution of calcium carbonate of step b) possesses a weight media particle size $d_{50}$ in the micrometer range. According to one embodiment, the micronized calcium has a weight median particle size $d_{50}$ from 0.1 to 100 $\mu$m, from 0.5 to 50 $\mu$m, from 1 to 15 $\mu$m, preferably from 2 to 10 $\mu$m, most preferably from 3 to 5 $\mu$m, or the calcium carbonate has a weight median particle size $d_{50}$ from 1 to 50 $\mu$m, from 2 to 20 $\mu$m, preferably from 5 to 15 $\mu$m, and most preferably from 8 to 12 $\mu$m.

Examples for suitable calcium carbonates are ground calcium carbonate, precipitated calcium carbonate, or a mixture thereof. A natural ground calcium carbonate (GCC) may be derived from, e.g., one or more of marble, limestone,

chalk, and/or dolomite. A precipitated calcium carbonate (PCC) may feature, e.g., one or more of aragonitic, vateritic and/or calcitic mineralogical crystal forms. Aragonite is commonly in the acicular form, whereas vaterite belongs to the hexagonal crystal system. Calcite can form scalenohedral, prismatic, spheral, and rhombohedral forms.

According to one embodiment of the present invention, the calcium carbonate is a ground calcium carbonate (GCC). According to a preferred embodiment, the calcium carbonate is a ground calcium carbonate having a particle size from 3 to 5 $\mu$m.

According to another embodiment of the present invention, the calcium carbonate comprises an HCl insoluble content from 0.02 to 2.5 wt.-%, 0.05 to 1.5 wt.-%, or 0.1 to 0.6 wt.-%, based on the total weight of the calcium carbonate. Preferably, the HCl insoluble content of the calcium carbonate does not exceed 0.6 wt.-%, based on the total weight of the calcium carbonate. The HCl insoluble content may be, e.g., minerals such as quartz, silicate or mica.

In addition to the calcium carbonate, the solution of calcium carbonate can comprise further micronized minerals. According to one embodiment, the solution of calcium carbonate can comprise micronized magnesium carbonate, calcium magnesium carbonate, e.g. dolomitic limestone, calcareous dolomite or half burnt dolomite, magnesium oxide such as burnt dolomite, magnesium sulfate, potassium hydrogen carbonate, sodium hydrogen carbonate or other minerals containing essential trace elements.

According to one embodiment of the present invention, the solution of calcium carbonate is freshly prepared before it is combined with the feed water. The on-site preparation of the solution of calcium carbonate may be preferred. The reason is that when the solution of calcium carbonate is not prepared on-site and/or freshly the addition of further agents such as stabilizers or biocides to the solution of calcium carbonate may be required for stabilizing reasons. However, such agents may be unwanted compounds in the remineralized water, e.g. for toxic reasons or may inhibit the formation of freely available $Ca^{2+}$ ions. According to one preferred embodiment of the present invention, the time period between the preparation of the solution of calcium carbonate and the injection of the solution of calcium carbonate is short enough to avoid bacterial growth in the solution of calcium carbonate. According to one exemplary embodiment, the time period between the preparation of the solution of calcium carbonate and the injection of the solution of calcium carbonate is less than 48 hours, less than 24 hours, less than 12 hours, less than 5 hours, less than 2 hours or less than 1 hour. According to another embodiment of the present invention, the injected solution meets the microbiological quality requirements specified by the national guidelines for drinking water.

The solution of calcium carbonate can be prepared, for example, using a mixer such as a mechanical stirrer for solutions, or a specific powder-liquid mixing device for more concentrated solutions of calcium carbonate, or a loop reactor. According to one embodiment of the present invention, the solution of calcium carbonate is prepared using a mixing machine, wherein the mixing machine enables simultaneous mixing and dosing of the solution of calcium carbonate.

The water used to prepare the solution can, for example, be distilled water, feed water or industrial water. According to one preferred embodiment of the invention, the water used to prepare the solution is feed water, e.g. permeate or distillate obtained from a desalination process. According to one exemplary embodiment, the water used to prepare the solution of calcium carbonate is acidified carbon dioxide. Without being bound to any theory, it is believed that such a $CO_2$-pretreatment of the water used to prepare the solution of calcium carbonate increases the dissolution of calcium carbonate in the water, and thus decreases the reaction time.

According to one embodiment the solution of calcium carbonate comprising dissolved calcium carbonate is injected directly into a stream of feed water. For example, the solution of calcium carbonate can be injected into the feed water stream at a controlled rate by means of a pump communicating with a storage vessel for the solution. Preferably, the solution of calcium carbonate may be injected into the feed water stream at a rate of 1 to 200 $l/m^3$ of feed water, depending on the solution concentration and the final concentration in the remineralized water. According to another embodiment the solution of calcium carbonate comprising dissolved calcium carbonate is mixed with the feed water in a reaction chamber, e.g., using a mixer such as a mechanical mixer. According to still another embodiment the solution of calcium carbonate is injected in a tank receiving the entire flow of feed water.

According to one embodiment of the present invention, only a part of the feed water is remineralized by injecting the solution of calcium carbonate, and subsequently, the remineralized water is blended with untreated feed water. Optionally, only a part of the feed water is remineralized to a high calcium carbonate concentration compared to the final target value, and, subsequently, the remineralized water is blended with untreated feed water.

According to another embodiment the concentrated solution of calcium carbonate or part of the concentrated solution of calcium carbonate is filtered, e.g., by ultra filtration, to further reduce the turbidity level of the remineralized water.

For the purpose of the present invention, the term "concentrated solution of calcium carbonate" is to be understood as a solution of calcium carbonate that contains the maximum possible amount of dissolved calcium carbonate in the respective solvent. This highest possible amount of dissolved calcium carbonate can be determined by methods known to the person skilled in the art, such as the measurement of the conductivity, or the measurement of the hardness by titration.

The quality of the remineralized water can, for example, be assessed by the Langelier Saturation Index (LSI). According to one embodiment, the remineralized water has a Langelier Saturation Index from -1 to 2, preferably from -0.5 to 0.5, most preferred from -0.2 to 0.2. According to another embodiment, the remineralized water has a Silt Density Index $SDI_{15}$ below 5, preferably below 4, and most preferred below 3. According to still another embodiment the remineralized water has a Membrane Fouling Index $MFI_{0.45}$ below 4, preferably below 2.5, most preferred below 2. The assessment can be done, e.g., by measuring the pH of the treated feed water continuously. Depending on the remineralization system, the pH of the treated pH can be measured, e.g., in a stream of treated water, in a reaction chamber, wherein the solution of calcium carbonate and the feed water is mixed, or in a storage tank for the remineralized water. According to one embodiment of the present invention, the pH is measured 30 min, 20 min, 10 min, 5 min or 2 min after the remineralization step. The measurement of the pH value may be done at room temperature, i.e. at about 20°C.

According to one exemplary embodiment of the invention, the amount of the injected solution of calcium carbonate is controlled by detecting the pH value of the treated feed water. Alternatively or additionally, the amount of the injected solution of calcium carbonate is controlled by detecting parameters such as alkalinity, total hardness, conductivity, calcium concentration, $CO_2$ concentration, total dissolved solids, or turbidity. According to one embodiment, the process of the present invention further comprises the steps of (d) measuring a parameter value of the remineralized water, wherein the parameter is selected from the group comprising alkalinity, total hardness, conductivity, calcium concentration, pH, $CO_2$ concentration, total dissolved solids, or turbidity of the remineralized water, (e) comparing the measured parameter value with a predetermined parameter value, and (f) providing the amount of injected solution of calcium carbonate on the basis of the difference between the measured and the predetermined parameter value.

According to one embodiment, the predetermined parameter value is a pH value, wherein the pH value is from 5.5 to 9, preferably from 7 to 8.5.

Fig. 1 shows a scheme of an apparatus that can be used for operating the inventive method. In this embodiment, the feed water flows from a reservoir (1) into a pipeline (2). A further pipe (12) is arranged between the reservoir (1) and a storage tank (9). The pipe (12) has a gas inlet (5) through which carbon dioxide from a carbon dioxide source (4) can be injected into the feed water to prepare $CO_2$ - acidified water in a first step. A mixer (8) is connected to the pipe (12) downstream the reservoir (1). In the mixer (8), the solution of calcium carbonate is prepared on-site by mixing water that is obtained from the reservoir (1) via pipe (12) and the calcium carbonate obtained from a storage container (7). A storage tank (9) can be in connection with the pipe (12). When it is present, it is provided after the mixer (8) in order to store the solution of calcium carbonate before its introduction into the feed water stream. A inlet (10) is located downstream of the reservoir (1) in pipeline (2) through which the solution of calcium carbonate comprising dissolved calcium carbonate coming from the mixer (8) is injected into the feed water stream via the storage tank (9), when present. The pH of the remineralized water can be measured downstream of the slurry inlet (10) on a sample point (11). According to one embodiment the flow rate of the feed water is 20 000 and 500 000 $m^3$ per day.

Fig. 2 shows another embodiment of the present invention. In this embodiment, the aqueous suspension of calcium carbonate is prepared in a first step by introducing the calcium carbonate obtained from a storage container (7) in the feed water that is obtained from reservoir (1) and flows through pipe (12). In a second step, the carbon dioxide from a carbon dioxide source (4) is combined with the water of pipe (12) that already contains the suspension of calcium carbonate in the mixer (8). Then, the water containing the suspension of calcium carbonate and the carbon dioxide are mixed in order to obtain the solution of calcium carbonate comprising dissolved calcium carbonate. Through inlet (10) located in pipeline (2) downstream of the reservoir (1), the solution of calcium carbonate comprising dissolved calcium carbonate coming from the mixer (8) is then injected into the feed water stream. The pH of the remineralized water can be measured downstream of the slurry inlet (10) on a sample point (11). According to one embodiment the flow rate of the feed water is 20 000 and 500 000 $m^3$ per day.

It is noted that the storage tank (9) is an optional feature for carrying out the process of the present invention. In other words, the storage tank (9) has not to be present in embodiments of the present invention. In this case, the solution of calcium carbonate is directly injected from the mixer (8) into the feed water stream of pipeline (2) through inlet (10).

The inventive process may be used to produce drinking water, recreation water such as water for swimming pools, industrial water for process applications, irrigation water, or water for aquifer or well recharge.

According to one embodiment, the carbon dioxide and calcium carbonate concentrations in the remineralized water meet the required values for drinking water quality, which are set by national guidelines. According to one embodiment the remineralized water obtained by the inventive process has a calcium concentration from 15 to 200 mg/L as $CaCO_3$, preferably from 30 to 150 mg/L, and most preferred from 40 to 60 mg/L, or preferably from 50 to 150 mg/L as $CaCO_3$, and most preferred from 100 to 125 mg/L as $CaCO_3$. In case the solution comprises a further magnesium salt such as magnesium carbonate, or magnesium sulfate, the remineralized water obtained by the inventive process may have a magnesium concentration from 5 to 25 mg/L, preferably from 5 to 15 mg/L, and most preferred from 8 to 12 mg/L

According to one embodiment of the present invention the remineralized water has a turbidity of lower than 5.0

NTU, lower than 1.0 NTU, lower than 0.5 NTU, or lower than 0.3 NTU.

According to one exemplary embodiment of the present invention the remineralized water has a LSI from -0.2 to +0.2, a calcium concentration from 15 to 200 mg/L, a magnesium concentration from 5 to 25 mg/L, an alkalinity between 100 and 200 mg/Las CaCO3, a pH between 7 and 8.5, and a turbidity of lower than 0.5 NTU.

According to one embodiment of the present invention a step of particle removal is carried out after mineralization, e.g., to reduce the turbidity level of the remineralized water. According to one embodiment a sedimentation step is carried out. For example, the feed water and/or remineralized water may be piped into a clarifier or storage tank to further reduce the turbidity level of the water. According to another embodiment the particles may be removed by decantation. Alternatively, at least a part of the feed water and/or remineralized water may be filtered, e.g., by ultra filtration, to further reduce the turbidity level of the water.

Examples

The following examples present the preparation of different solutions of calcium carbonate at various concentrations, which were prepared from a range of calcium carbonate products according to their physical and chemical properties, e.g. carbonate rocks, mean particle size, insoluble content, and so on.

The following Table 1 summarizes the different calcium carbonate products used during the remineralization tests

Table 1

| Samples[1] | Calcium carbonate rock | $d_{50}$ (μm) | HCl insoluble (%) |
|---|---|---|---|
| A | Limestone | 3.0 | 0.1 |
| B | Marble | 1.8 | 1.5 |
| C | Marble | 2.8 | 1.5 |
| D | Marble | 3.3 | 2.0 |
| E | Marble | 8.0 | 2.0 |
| F | Marble | 4.4 | 0.2 |
| G | Marble | 10.8 | 0.2 |
| H | PCC | 0.6 | 0.1 |

[1] It has to be noted that all of the above listed calcium carbonates are commercially available from Omya, Switzerland.

**A. Lab examples:**

Three samples were tested for this study, sample A is a limestone calcium carbonate from France and samples B and C are a marble calcium carbonate supplied from the same plant in Australia, but with different weight median particle size.

Table 2 summaries the different products used during the remineralization tests performed at lab-scale

Table 2

| Sample | $d_{50}$ (μm) | $CaCO_3$ (%) | HCl insoluble (%) |
|---|---|---|---|
| A | 3.0 | 99.3 | 0.1 |
| B | 1.8 | 95.0 | 1.5 |
| C | 2.8 | 95.0 | 1.5 |

The water used for these remineralization tests was water that was obtained by reverse osmosis (RO) and that has the following average quality:

| | pH | Temperature (°C) | Alkalinity (mg/L as $CaCO_3$) | Conductivity (μS/cm) | Turbidity (NTU) |
|---|---|---|---|---|---|
| Feed water | 5.4-5.6 | 20-22 | 6.3-6.5 | 15 - 17 | < 0.1 |

The carbon dioxide used is commercially available as "Kohlendioxid 3.0" from PanGas AG, Dagmersellen, Switzerland. The purity is ≥ 99.9 Vol.-%.

**A.1 Maximal concentration of dissolved calcium carbonate in solution:**

Preparation of calcium carbonate solution

The maximal concentration of dissolved calcium carbonate in RO (reverse osmosis) water was investigated by mixing $CaCO_3$ with RO water that was pre-dosed with carbon dioxide ($CO_2$). In $CO_2$ - acidified conditions one expects to dissolve up to 1 g of $CaCO_3$. All the lab tests were run by batch of 1L RO water with $CO_2$ pre-dosing at 1.5 L/min for 30 seconds through a glass nozzle placed into the RO water sample.

The limestone calcium carbonate (sample A) was used for initial testing. Initial concentrations of 0.6, 0.8, 1.0 and 1.2 g/L of $CaCO_3$ in $CO_2$ - acidified RO water were prepared, and each of said water samples having a different $CaCO_3$ concentration was agitated during 5 min in a closed bottle, and then was allowed to settle during 24h. The supernatant for each water sample having a different initial $CaCO_3$ concentration was taken and analyzed.

Table 3 shows the different results obtained for the preparation of the concentrated $CaCO_3$ solution in $CO_2$ - acidified water using sample A at different $CaCO_3$ concentrations in the RO (reverse osmosis) water.

Table 3

| Initial $CaCO_3$ concentration (g/L) | pH | Alkalinity (mg/L as $CaCO_3$) |
|---|---|---|
| 0.6 | 6.13 | 405.6 |
| 0.8 | 6.22 | 438.2 |
| 1.0 | 6.31 | **466.8** |
| 1.2 | 6.52 | 387.8 |

The maximal alkalinity from the four supernatants was 466.8 mg/L as $CaCO_3$. This maximal alkalinity was obtained in the supernatant prepared by the addition of 1.0 g/L $CaCO_3$ in $CO_2$ - acidified RO water. However some precipitate could still be observed at the bottom of the flask.

The marble calcium carbonate samples B and C are produced from a single production site, but have different weight median particle size. Both products were also tested for the determination of the maximal concentration of dissolved $CaCO_3$ in $CO_2$ - acidified RO water.

This test was performed under the same conditions as for the previous tests. The initial $CaCO_3$ concentrations used were 0.5 and 0.7 g/L for both samples B and C. The supernatants obtained after 24h of settling were sampled and analyzed.

Table 4 shows the different results obtained for the preparation of the different concentrated $CaCO_3$ solutions in $CO_2$ - acidified water using samples B and C at two different $CaCO_3$ concentrations in the RO.

Table 4

| Samples | Initial $CaCO_3$ concentration (g/L) | pH | Alkalinity (mg/L as $CaCO_3$) | Conductivity (μS/cm) | Turbidity (NTU) |
|---|---|---|---|---|---|
| B | 0.5 | 5.90 | 423.1 | 1 063 | 3.64 |
| B | 0.7 | 6.01 | **529.0** | 1449 | 3.58 |
| C | 0.5 | 5.86 | 386.3 | 898 | 1.88 |
| C | 0.7 | 5.97 | **516.4** | 1 293 | 3.37 |

As can be derived from Table 4, the maximal alkalinity of the four supernatants was obtained by the addition of 0.7 g/L $CaCO_3$ in $CO_2$ - acidified RO water, and reached 529.0 and 516.4 mg/L as $CaCO_3$ for the supernatants prepared from sample B and sample C, respectively. The alkalinity of the supernatant prepared from sample C with an initial concentration of 0.5 g/L was lower than expected. The reason for this is unclear, but is probably due to an imprecise dosing. Nevertheless, it fits with the lower values also observed for conductivity and turbidity. However, some precipitate could also be observed at the bottom of the flask.

## A.2 pH change during remineralization with calcium carbonate:

Some remineralization tests were performed by dosing the concentrated $CaCO_3$ solutions of the marble $CaCO_3$ (samples B and C) into the RO water. By diluting the concentrated $CaCO_3$ solution into the RO water, the appropriate properties for the treated water can be achieved.

The volume of concentrated $CaCO_3$ solution added to the RO water was calculated according to its alkalinity, aiming for an alkalinity increase of 45 mg/L as $CaCO_3$. This dosing corresponds to a dilution factor of 8 - 12 with respect to the initial alkalinity of the $CaCO_3$ solutions. The RO water used for these remineralization tests had a pH value of 5.32, and the alkalinity was 6.32 mg/L as $CaCO_3$.

After 2 minutes of mixing, sampling was performed and the conductivity and turbidity were measured, giving values between 107 - 118 μS/cm and 0.4 - 0.6 NTU, respectively. After 10 minutes, the final pH and alkalinity were also measured giving pH values of 6.3 to 6.4, and 50 to 53 mg/L as $CaCO_3$ for the final alkalinity, respectively.

Table 5 shows the different results obtained for the remineralization ofRO water by dosing a concentrated $CaCO_3$ solution of samples B and C into the RO water (addition of 45 mg/L $CaCO_3$)

Table 5

| Samples | | Remineralized RO water | | | |
|---|---|---|---|---|---|
| Name/ Initial $CaCO_3$ concentration | Alkalinity of the $CaCO_3$ solution (mg/L as $CaCO_3$) | ph[1] | Alkalinity[1] (mg/L as $CaCO_3$) | Conductivity [2] (μS/cm) | Turbidity [2] (NTU) |
| Sample B: 0.5 g/L | 423.1 | 6.34 | 51.4 | 106.7 | 0.52 |
| Sample B: 0.7 g/L | 529.0 | 6.44 | 51.6 | 111.7 | 0.39 |
| Sample C: 0.5 g/L | 386.3 | 6.43 | 53.2 | 117.5 | 0.63 |
| Sample C: 0.7 g/L | 516.4 | 6.39 | 49.7 | 106.7 | 0.48 |

[1]Measured 10 minutes after the addition of the $CaCO_3$ solution to the RO water
[2] Measured 2 minutes after the addition of the $CaCO_3$ solution to the RO water

Starting at pH 5.32 of the RO water the addition of the $CaCO_3$ solutions induced a fast pH change up to 6.3 - 6.4, and within a few minutes the pH reaches a steady state. The final pH is lower than the target values between 7.0 and 8.5. It is suspected that the $CO_2$ has been over-dosed during this test.

As a conclusion for the concentrated $CaCO_3$ solutions in $CO_2$ - saturated RO water, the maximal values for alkalinity was in rounded figures 470 mg/L as $CaCO_3$ for the limestone sample A, and between 520 and 530 mg/L as $CaCO_3$ for the marble samples B and C. Remineralization with the concentrated $CaCO_3$ solutions presented a rapid pH increase, and the stabilized pH was obtained within a few minutes. The final pH shows values between 6.3 and 6.4 for the remineralization of RO water up to the alkalinity of 50 mg/L as $CaCO_3$, starting with RO water of a pH of 5.5, and an alkalinity of 6 mg/L as $CaCO_3$.

## B. Pilot-scale examples:

### B.1 Pilot remineralization unit 1:

Following the initial lab-scale remineralization tests, the pilot testing aimed at studying the process performances at a larger scale. Different types of calcium carbonate were also tested on this pilot unit. The water used was deionised water instead of reverse osmosis water. The carbon dioxide used is commercially available as "Kohlendioxid 3.0" from PanGas AG, Dagmersellen, Switzerland. The purity is ≥ 99.9 Vol.-%.

The pilot unit consisted in a 100 L mixing container where the $CaCO_3$ in powder form and the deionised water were mixed at the beginning of each test. The resulting $CaCO_3$ solution was then pumped through tube reactor at a pressure up to 2 bars. The $CO_2$ was dosed at the start of the tube reactor at a defined flow rate, and the remineralized water flowed then through the tube reactor for allowing the complete dissolution of the $CaCO_3$ in the water. Samples of the concentration $CaCO_3$ solutions were taken at the end of the pipe and the pH, conductivity, turbidity were measured.

The deionised water used for these tests had the following average quality:

| | pH | Temperature (°C) | Conductivity (μS/cm) |
|---|---|---|---|
| Feedwater | 4.3-4.5 | 25 | 4-7 |

**B.1.1 Maximal concentration of dissolved calcium carbonate in solution (Sample A):**

The maximal concentration of dissolved calcium carbonate in deionised water was also tested on a pilot unit in a continuous mode. The pilot tests were performed under acidic conditions by dosing carbon dioxide ($CO_2$) into a suspension of calcium carbonate in water. According to the previous lab tests the maximal alkalinity was obtained for initial concentration between 500 and 700 mg/L of calcium carbonate in deionised water under $CO_2$ - acidified conditions. For all the pilot tests a solution having an initial concentration of calcium carbonate was mixed with the deionised water and was pumped through a tube reactor at an average flow rate of 15 L/h under a pressure of around 2 bars.

The limestone calcium carbonate (Sample A) was used for the initial pilot testing with initial concentrations of 0.5, 0.6, 0.7 g/L of $CaCO_3$ in $CO_2$ - acidified water. The residence time in the tube reactor was around 45 minutes, and when a steady state was reached, the resulting concentrated calcium carbonate solutions were collected at the exit of the tube reactor and analyzed for pH, turbidity, conductivity and alkalinity.

Table 6 shows the different results obtained for the preparation of the concentrated $CaCO_3$ solution in $CO_2$ - acidified water using sample A at different initial $CaCO_3$ concentrations in the deionised water.

Table 6

| Trial No. | Initial $CaCO_3$ concentration (g/L) | pH | Alkalinity (mg/L as $CaCO_3$) | Conductivity (μS/cm) | Turbidity (NTU) |
|---|---|---|---|---|---|
| 1 | 0.5 | 5.52 | 354 | 655 | 1.73 |
| 2 | 0.5 | 5.63 | 350 | 646 | 1.35 |
| 3 | 0.6 | 5.47 | 408 | 719 | 2.44 |
| 4 | 0.7 | 5.69 | 458 | 907 | 3.03 |

As can be seen from Table 6, the maximal alkalinity (within the dose range used) when using Sample A was obtained for the addition of 0.7 g/L $CaCO_3$ in $CO_2$ - acidified feed water and reached 458 mg/L as $CaCO_3$, for which the turbidity was 3.03 NTU.

**B.1.2 Different types of calcium carbonate:**

The limestone calcium carbonate (sample A) from France was compared with other calcium carbonate products for the preparation of a concentrated solution of calcium carbonate. From two different production plants, two marble calcium carbonates with different weight median particle sizes were tested, i.e. sample D and sample E were produced in the same plant in Austria, but have a weight median particle size of 3.3 and 8.0 μm, respectively. Similarly sample F and sample G were produced in the same plant in France, and have a weight median particle size of 4.4 and 10.8 μm, respectively. The main difference between the two production sites is the quality of the starting material, with a very high insoluble content of 2.0% for the first plant (samples D and E) and a low insoluble content of 0.2% for the second plant (samples F and G). The last product tested, sample H, was a precipitated calcium carbonate (PCC) product from Austria that is very pure and fine.

Table 7 summaries the different calcium carbonate products used during the remineralization tests performed at pilot-scale

Table 7

| Sample | $d_{50}$ (μm) | BET Specific surface area ($m^2/g$) | HCl insoluble (%) |
|---|---|---|---|
| A | 3.0 | 2.7 | 0.1 |
| D | 3.3 | 3.8 | 2.0 |
| E | 8.0 | 2.2 | 2.0 |
| F | 4.4 | 3.6 | 0.2 |
| G | 10.8 | 1.7 | 0.2 |

(continued)

| Sample | $d_{50}$ (μm) | BET Specific surface area ($m^2/g$) | HCl insoluble (%) |
|---|---|---|---|
| H | 0.6 | 19.8 | 0.1 |

The pilot tests were performed with a starting concentration for each calcium carbonate product of 0.5 g/L of $CaCO_3$ in $CO_2$ - acidified water. The residence time in the tube reactor was the same as in the previous pilot trials, i.e. around 45 minutes with a flow rate of 15 L/h. When a steady state was reached, the resulting concentrated calcium carbonate solutions were collected at the exit of the tube reactor and analyzed for pH, turbidity, conductivity and alkalinity.

Table 8 shows the different results obtained for the preparation of the concentrated $CaCO_3$ solutions in $CO_2$ - acidified water with different calcium carbonates for a defined $CaCO_3$ concentration in the deionised water.

Table 8

| Trial No. | Samples | Initial $CaCO_3$ concentration (g/L) | pH | Alkalinity (mg/L as $CaCO_3$) | Conductivity (μS/cm) | Turbidity (NTU) |
|---|---|---|---|---|---|---|
| 5 | A | 0.5 | 5.52 | 354 | 655 | 1.73 |
| 6 | A | 0.5 | 5.63 | 350 | 646 | 1.35 |
| 7 | D | 0.5 | 5.59 | 375 | 683 | 19.00 |
| 8 | E | 0.5 | 5.34 | 192 | 397 | 16.20 |
| 9 | F | 0.5 | 5.50 | 313 | 574 | 4.34 |
| 10 | G | 0.5 | 5.24 | 192 | 360 | 2.83 |
| 11 | H | 0.5 | 5.65 | 433 | 798 | 2.53 |

As can be seen from Table 8, when sampled at the exit of the tube reactor the concentrated calcium carbonate solution with the maximal alkalinity was obtained when using the precipitated calcium carbonate (PCC) product (sample H). However, the turbidity measured for this concentrated calcium carbonate solution is not the minimal value obtained for this series of tests. In comparison with all the marble products (samples D, E, F, G), the limestone calcium carbonate (sample A) presented low turbidity values. When comparing two products of different particle sizes, for instance samples D and E, or samples F and G, it was surprisingly found that the higher the mean particle size is, the lower turbidity can be achieved. However, as expected, the lower the mean particle size is, the higher the final alkalinity and conductivity will be.

**B.1.3 Dilution to target remineralization concentration:**

To meet the target water qualities, the concentrated calcium carbonate solution was dissolved with deionised water. Dilution factors were defined according to the initial alkalinity of the concentrated calcium carbonate with the aim of decreasing the alkalinity down to 45 mg/L as $CaCO_3$. The final pH was adjusted to 7.8 with a 5 wt% NaOH solution, and the final turbidity was measured.

Table 9 shows the different results for the remineralized water obtained by dosing a concentrated $CaCO_3$ solution of sample A into the deionised water (addition of 45 mg/L $CaCO_3$).

Table 9

| Concentrated calcium carbonate solutions | | | Turbidity of the remineralized water (NTU) |
|---|---|---|---|
| Trial No. | Sample / Initial $CaCO_3$ concentration | Initial alkalinity (mg/L as $CaCO_3$) | |
| 12 | Sample A: 0.5 g/L | 350 | 0.39 |
| 13 | Sample A: 0.5 g/L | 392 | 1.03 |
| 14 | Sample A: 0.6 g/L | 408 | 0.97 |
| 15 | Sample A: 0.7 g/L | 458 | 0.80 |

As can be derived from Table 9, the lowest turbidity level for this remineralization tests using a concentrated calcium carbonate was 0.39 NTU (rounded 0.4 NTU). The other trials gave higher turbidity levels between 0.8 and 1.0 (rounded values of 0.97 and 1.03) NTU.

Following a respective WHO guideline, there is most probably in future the demand to also adjust the content of soluble magnesium compounds in the final potable water to about 10 mg/L Mg.

An attempt was made to adjust the Mg content in the solution via admixing a magnesium salt to sample A of calcium carbonate before introducing the solution into the tube reactor. $MgSO_4$ was selected as soluble Mg salt, however, it is mentioned that the final level of sulphate in the water should still remain in the allowed range (< 200 ppm), especially when the treated water is used for agriculture applications. Dilution factors were also defined according to the initial alkalinity of the concentrated calcium carbonate with the aim of decreasing the alkalinity down to 45 mg/L as $CaCO_3$. The final pH was adjusted to 7.8 with a 5 wt% NaOH solution, and the final turbidity was measured.

Table 10 shows the different results for the remineralized water obtained by dosing a concentrated $CaCO_3$ solution of sample A and magnesium sulphate into the deionised water (addition of 45 mg/L $CaCO_3$)

Table 10

| Concentrated calcium carbonate solutions | | | Turbidity of the final remineralized water (NTU) |
|---|---|---|---|
| Trial No. | Initial $CaCO_3$ concentration / initial $MgSO_4$ concentration | Initial alkalinity (mg/L as $CaCO_3$) | |
| 16 | $[CaCO_3]$ = 0.5 g/L<br>$[MgSO_4]$ = 0.1 g/L | 367 | 0.39 |
| 17 | $[CaCO_3]$ = 0.5 g/L<br>$[MgSO_4]$ = 0.1 g/L | 329 | 0.37 |

Some samples of remineralized water were sent to a water quality control laboratory in order to evaluate all drinking water properties. For instance, the remineralized water obtained by using only calcium carbonate and that showed the lowest turbidity level was obtained from Trials No. 12 and No. 15. The remineralized water obtained by using a mixture of calcium carbonate and magnesium sulphate and that showed the lowest turbidity level was obtained from Trial No. 17. These three samples were sent to the Carinthian Institut for Food Analysis and Quality Control, Austria, for analysis, and the water samples were approved by the institute to be in compliance with the strict Austrian guidelines for drinking water quality and with the WHO guidelines for soluble magnesium.

Table 11 shows the drinking water quality for the remineralized water obtained by dosing a concentrated $CaCO_3$ solution of sample A into the deionised water (addition of 45 mg/L $CaCO_3$)

Table 11

| Drinking water properties | Remineralized water samples | | |
|---|---|---|---|
| | $CaCO_3$ only | | $CaCO_3$ / $MgSO_4$ |
| | Trial No. 12 | Trial No. 15 | Trial No. 17 |
| Calcium (mg/L) | 19.0 | 21.2 | 21.2 |
| Magnesium (mg/L) | - | - | 13.4 |
| Total hardness (mg/L as $CaCO_3$) | 47.2 | 52.7 | 109.7 |
| pH | 7.9 | 7.7 | 7.7 |
| Saturation index | 0.1 | -0.3 | 0 |
| Conductivity ($\mu$S/cm) | 446 | 216 | 540 |
| Turbidity (NTU) | 0.4 | 0.3 | 0.33 |

**B.2 Pilot remineralization unit 2:**

Following the initial pilot remineralization tests a new series of trials at pilot scale were performed on another remineralization unit able to work at a pressure range from 2 - 7 bars, a RO water flow rates between 300 and 400 L/h, and a $CO_2$ dosing between 1.1 and 5.5 L/min. The carbon dioxide used is commercially available as "Kohlendioxid 3.0"

from PanGas AG, Dagmersellen, Switzerland. The purity is ≥ 99.9 Vol.-%.

The pilot unit consisted in a 60 L mixing container where the $CaCO_3$ in powder form and the RO water were introduced at defined times (i.e. more than once). The resulting $CaCO_3$ solution was then pumped through a mixer where the $CO_2$ was dosed at a defined flow rate, and the concentrated $CaCO_3$ solution was passed through a pipe for allowing the complete dissolution of the $CaCO_3$ in the water. The residence time in the tube reactor was around 45 minutes, and when a steady state was reached, the resulting concentrated calcium carbonate solutions were collected at the exit of the tube reactor and analyzed for pH, turbidity, conductivity and alkalinity.

**B.2.1 Different working pressures:**

Different working pressures were tested on the above described remineralization pilot unit in order to study the effect of pressure on the dissolution of calcium carbonate in RO water under acidic conditions with carbon dioxide ($CO_2$). According to the results from the former pilot tests an initial concentration of 500 mg/L of calcium carbonate in RO water was prepared, and the resulting solution was dosed with some excess $CO_2$. The pilot tests performed at different working pressure had a flow rate of 300 L/h, and the pressure was varied between 2 and 7 bars. The calcium carbonate used for these pilot tests was a limestone from France (Sample A).

Table 12 shows the different results obtained for the preparation of the concentrated $CaCO_3$ solution in $CO_2$-acidified water using sample A having a concentration of 0.5 g/L of $CaCO_3$ in the RO water at different pressures and for a $CO_2$ flow rate of 3.3 L/min.

Table 12

| Trial No. | Pressure (bar) | Temperature (°C) | pH | Conductivity (μS/cm) | Turbidity (NTU) |
|---|---|---|---|---|---|
| 18 | 2.0 | 27 | 6.51 | 660 | 20 |
| 19 | 2.0 | 25 | 6.66 | 660 | 23 |
| 20 | 4.0 | 28 | 6.55 | 700 | N/A |
| 21 | 5.5 | 29 | N/A | 680 | 40 |
| 22 | 5.5 | 28 | 6.84 | 670 | 34 |
| 23 | 6.0 | 30 | 6.53 | 680 | 28 |
| 24 | 7.0 | 29 | 6.91 | 660 | 30 |

These pilot tests showed that under these testing conditions a higher pressure does not improve the dissolution of $CaCO_3$ resulting in higher turbidity level for the higher pressures tested. One of the consequences of using higher pressure is the temperature increase of the $CaCO_3$ solution which is due to the pumps. Therefore, the remineralized water exiting the pilot unit is hotter, which may have an impact on the solubility of the $CO_2$ in the water. In other words, the higher the temperature of the water, the lower the $CO_2$ dissolution in the water. As a consequence of the below reaction scheme:

$$CaCO_3 + CO_2 + H_2O \rightarrow Ca^{2+} + 2\ HCO_3^-$$

there is less dissolved $CaCO_3$ in the solution, which in turn leads to a higher turbidity level due to the amount of undissolved $CaCO_3$.

**B.2.2 Different $CO_2$ flowrates:**

It is highly suspected that the dosing of $CO_2$ will have a significant impact on the dissolution rate of the $CaCO_3$ in the RO water. Therefore, different flow rates of $CO_2$ were tested for the preparation of the concentrated solution of $CaCO_3$. All the tests were performed using the same protocol as described for the previous tests for a defined pressure, but with different $CO_2$ flow rates.

Table 13 shows the different results obtained for the preparation of the concentrated $CaCO_3$ solution in $CO_2$-acidified water using sample A having a concentration of 0.5 g/L of $CaCO_3$ in the RO water, at a pressure of 5.5 bars using different $CO_2$ flow rates.

Table 13

| Trial No. | $CO_2$ flow rate (L/min) | Temperature (°C) | Conductivity (μS/cm) | Turbidity (NTU) |
|---|---|---|---|---|
| 25 | 1.1 | 29 | 330 | 138 |
| 26 | 3.3 | 29 | 680 | 40 |
| 27 | 5.5 | 29 | 720 | 7 |

It can be seen from the results presented in Table 13 that under the tested conditions the solubility of the $CaCO_3$ in the RO water can be improved when increasing the $CO_2$ flow rate. This can be derived from the increase of the conductivity and a decrease of the turbidity at the exit of the reaction pipe, when increasing the $CO_2$ flow rate.

**B.2.3 Residence time:**

The residence time allocated for the dissolution of $CaCO_3$ to take place was also studied. In this regard, the pilot tests were performed using either one single or two pipes connected one after the other. This setting allowed to double the residence time from approximately 45 minutes for one pipe to approximately 90 minutes for two connected pipes, and therefore to study the impact of the residence time on the resulting turbidity and conductivity.

Table 14 shows the different results obtained for the preparation of the concentrated $CaCO_3$ solution in $CO_2$ - acidified water using sample A having a concentration of 0.5 g/L of $CaCO_3$ in the RO water at a defined $CO_2$ flow rate and pressure for different residence time.

Table 14

| Trial No. | Pressure (bar) | $CO_2$ flow rate (L/min) | Approximated residence time (min) | Temperature (°C) | Conductivity (μS/cm) | Turbidity (NTU) |
|---|---|---|---|---|---|---|
| 28 | 2.0 | 3.3 | 45 | 27 | 670 | 20 |
| 29 | 2.5 | 3.3 | 90 | 26 | 700 | 4 |
| 30 | 5.5 | 1.1 | 45 | 29 | 330 | 138 |
| 31 | 6.0 | 1.1 | 90 | 29 | 460 | 85 |

The two sets of tests presented in Table 14 show clearly that the residence time has a direct effect on the dissolution of $CaCO_3$ in the RO water for both tested conditions, i.e. Trials No.28 and No. 29, and Trials No. 30 and No. 31. It can clearly be seen that the longer the residence time, the lower the turbidity will be, and respectively the higher the conductivity will be.

## Claims

**1.** Process for remineralization of water comprising the steps of:

a) providing feed water,
b) providing an aqueous solution derived from calcium carbonate, wherein the aqueous solution comprises dissolved calcium carbonate and reaction species thereof, and wherein the concentration of calcium carbonate in the solution is from 0.1 to 1 g/L, and
c) combining the feed water of step a) and the aqueous solution of step b),

wherein the aqueous solution of step b) has been prepared by one of the following steps:

A) preparing an aqueous suspension of calcium carbonate in a first step, and introducing either: (i) a carbon dioxide generating compound, (ii) a carbon dioxide generating compound and an acid, or (iii) an acid to an aqueous suspension of calcium carbonate in a second step, or
B) introducing in a first step either: (i) a carbon dioxide generating compound, (ii) a carbon dioxide generating compound and an acid, or (iii) an acid in the water to be used for the preparation of the solution, and then introducing calcium carbonate, either in dry form or as a suspension in a second step in the water, or

C) introducing a suspension of calcium carbonate and either: (i) a carbon dioxide generating compound, (ii) a carbon dioxide generating compound and an acid, or (iii) an acid simultaneously,

wherein the calcium carbonate used for the preparation of the aqueous solution of step b) has a weight median particle size $d_{50}$ from 0.1 to 100 $\mu$m.

**2.** The process of claim 1, wherein the concentration of calcium carbonate in the solution is from 0.3 to 0.8 g/L, and preferably from 0.5 to 0.7 g/L, based on the total weight of the solution.

**3.** The process of any of the previous claims, wherein the calcium carbonate used for the preparation of the aqueous solution of step b) has a weight median particle size $d_{50}$ from 0.5 to 50 $\mu$m, from 1 to 15 $\mu$m, preferably from 2 to 10 $\mu$m, most preferably 3 to 5 $\mu$m, or the calcium carbonate has a weight median particle size $d_{50}$ from 1 to 50 $\mu$m, from 2 to 20 $\mu$m, preferably from 5 to 15 $\mu$m, and most preferably from 8 to 12 $\mu$m.

**4.** The process of any of the previous claims, wherein the calcium carbonate is a ground calcium carbonate, precipitated calcium carbonate, or mixture thereof.

**5.** The process of any of the previous claims, wherein the obtained remineralized water has a calcium concentration as calcium carbonate from 15 to 200 mg/L, preferably from 30 to 150 mg/L, and most preferably from 100 to 125 mg/L, or from 15 to 100 mg/L, preferably from 20 to 80 mg/L, and most preferably from 40 to 60 mg/L.

**6.** The process of any of the previous claims, wherein the solution of step b) comprises further minerals containing magnesium, potassium or sodium, preferably magnesium carbonate, calcium magnesium carbonate, e.g. dolomitic limestone, calcareous dolomite or half burnt dolomite, magnesium oxide such as burnt dolomite, magnesium sulfate, potassium hydrogen carbonate, or sodium hydrogen carbonate.

**7.** The process of claim 6, wherein the obtained remineralized water has a magnesium concentration from 5 to 25 mg/L, preferably from 5 to 15 mg/L and most preferred from 8 to 12 mg/L.

**8.** The process of any of the previous claims, wherein the remineralized water has a turbidity value of lower than 5.0 NTU, lower than 1.0 NTU, lower than 0.5 NTU, or lower than 0.3 NTU.

**9.** The process of any of the previous claims, wherein the remineralized water has a Langelier Saturation Index from -1 to 2, preferably from -0.5 to 0.5, most preferred from -0.2 to 0.2.

**10.** The process of any of the previous claims, wherein the remineralized water has a Silt Density Index $SDI_{15}$ below 5, preferably below 4, and most preferred below 3.

**11.** The process of any of the previous claims, wherein the remineralized water has a Membrane Fouling Index $MFI_{0.45}$ below 4, preferably below 2.5, most preferred below 2.

**12.** The process of any of the previous claims, wherein the feed water is desalinated seawater, brackish water or brine, treated wastewater or natural water such as ground water, surface water or rainfall.

**13.** The process according to any of the previous claims, wherein the remineralized water is blended with feed water.

**14.** The process according to any of the previous claims, wherein the process further comprises a particle removal step.

**15.** The process of any of the previous claims, wherein the process further comprises the steps of:

d) measuring a parameter value of the remineralized water, wherein the parameter is selected from the group comprising alkalinity, total hardness, conductivity, calcium concentration, pH, $CO_2$ concentration, total dissolved solids, and turbidity of the remineralized water,
e) comparing the measured parameter value with a predetermined parameter value, and
f) providing the amount of injected solution derived from calcium carbonate on the basis of the difference between the measured and the predetermined parameter value.

**16.** The process of claim 15, wherein the predetermined parameter value is a pH value, wherein the pH value is from

5.5 to 9, preferably from 7 to 8.5.

**17.** Use of a solution derived from calcium carbonate for remineralization of water, wherein the solution has been prepared by one of the following steps:

A) preparing an aqueous suspension of calcium carbonate in a first step, and introducing either: (i) a carbon dioxide generating compound, (ii) a carbon dioxide generating compound and an acid, or (iii) an acid to an aqueous suspension of calcium carbonate in a second step, or
B) introducing in a first step either: (i) a carbon dioxide generating compound, (ii) a carbon dioxide generating compound and an acid, or (iii) an acid in the water to be used for the preparation of the solution, and then introducing calcium carbonate, either in dry form or as a suspension in a second step in the water, or
C) introducing a suspension of calcium carbonate and either: (i) a carbon dioxide generating compound, (ii) a carbon dioxide generating compound and an acid, or (iii) an acid simultaneously,

wherein the calcium carbonate used for the preparation of the aqueous solution has a weight median particle size $d_{50}$ from 0.1 to 100 $\mu$m.

**18.** The use of claim 17, wherein the remineralized water is selected from drinking water, recreation water such as water for swimming pools, industrial water for process applications, irrigation water, or water for aquifer or well recharge.

**Patentansprüche**

**1.** Verfahren zur Remineralisierung von Wasser, umfassend die Schritte:

a) Bereitstellen von Speisewasser,
b) Bereitstellen von einer wässrigen Lösung, die von Calciumcarbonat stammt, wobei die wässrige Lösung gelöstes Calciumcarbonat und Reaktionsspezies davon umfasst, und wobei die Konzentration von Calciumcarbonat in der Lösung von 0,1 bis 1 g/L beträgt, und
c) Kombinieren des Speisewassers aus Schritt a) und der wässrigen Lösung aus Schritt b),

wobei die wässrige Lösung aus Schritt b) durch einen der folgenden Schritte zubereitet wurde:

A) Herstellen von einer wässrigen Calciumcarbonat-Suspension in einem ersten Schritt, und Einbringen von entweder: (i) einer Kohlenstoffdioxid erzeugenden Verbindung, (ii) einer Kohlenstoffdioxid erzeugenden Verbindung und einer Säure, oder (iii) einer Säure zu einer wässrigen Calciumcarbonat-Suspension in einem zweiten Schritt, oder
B) Einbringen in einem ersten Schritt von entweder: (i) einer Kohlenstoffdioxid erzeugenden Verbindung, (ii) einer Kohlenstoffdioxid erzeugenden Verbindung und einer Säure, oder (iii) einer Säure in das für die Herstellung der Lösung zu verwendende Wasser, und dann Einbringen von Calciumcarbonat, entweder in trockener Form oder als eine Suspension in einem zweiten Schritt in das Wasser, oder,
C) Einbringen einer Calciumcarbonat-Suspension und entweder: (i) einer Kohlenstoffdioxid erzeugenden Verbindung, (ii) einer Kohlenstoffdioxid erzeugenden Verbindung und einer Säure, oder (iii) einer Säure gleichzeitig,

wobei das für die Herstellung der wässrigen Lösung von Schritt b) verwendete Calciumcarbonat eine gewichtsgemittelte Partikelgrösse $d_{50}$ von 0,1 bis 100 $\mu$m aufweist.

**2.** Verfahren nach Anspruch 1, bei dem die Konzentration von Calciumcarbonat in der Lösung von 0,3 bis 0,8 g/L beträgt, bevorzugt von 0,5 bis 0,7 g/L, bezogen auf das Gesamtgewicht der Lösung.

**3.** Verfahren nach einem der vorhergehenden Ansprüche, bei dem das für die Herstellung der wässrigen Lösung aus Schritt b) verwendete Calciumcarbonat eine gewichtsgemittelte Partikelgrösse $d_{50}$ von 0,5 bis 50 $\mu$m aufweist, von 1 bis 15 $\mu$m, bevorzugt von 2 bis 10 $\mu$m, am meisten bevorzugt von 3 bis 5 $\mu$m, oder das Calciumcarbonat weist eine gewichtsgemittelte Partikelgrösse $d_{50}$ von 1 bis 50 $\mu$m auf, von 2 bis 20 $\mu$m, bevorzugt von 5 bis 15 $\mu$m, am meisten bevorzugt von 8 bis 12 $\mu$m.

**4.** Verfahren nach einem der vorhergehenden Ansprüche, bei dem das Calciumcarbonat ein vermahlenes Calciumcarbonat, ein gefälltes Calciumcarbonat oder ein Gemisch davon ist.

**5.** Verfahren nach einem der vorhergehenden Ansprüche, bei dem das erhaltene remineralisierte Wasser eine Calciumkonzentration als Calciumcarbonat von 15 bis 200 mg/L aufweist, bevorzugt von 30 bis 150 mg/L, und am meisten bevorzugt von 100 bis 125 mg/L, oder von 15 bis 100 mg/L, bevorzugt von 20 bis 80 mg/L, und am meisten bevorzugt von 40 bis 60 mg/L.

**6.** Verfahren nach einem der vorhergehenden Ansprüche, bei dem die Lösung aus Schritt b) weitere Mineralien umfasst, die Magnesium, Kalium oder Natrium enthalten, bevorzugt Magnesiumcarbonat, Calciummagnesiumcarbonat, z.B. dolomitischen Kalkstein, kalkhaltigen Dolomit oder halbgebrannten Dolomit, Magnesiumoxid, wie gebrannten Dolomit, Magnesiumsulfat, Kaliumhydrogencarbonat oder Natriumhydrogencarbonat.

**7.** Verfahren nach Anspruch 6, bei dem das erhaltene remineralisierte Wasser eine Magnesiumkonzentration von 5 bis 25 mg/L aufweist, bevorzugt von 5 bis 15 mg/L, und am meisten bevorzugt von 8 bis 12 mg/L.

**8.** Verfahren nach einem der vorhergehenden Ansprüche, bei dem das remineralisierte Wasser einen Trübungswert von kleiner 5,0 NTU aufweist, kleiner 1,0 NTU, kleiner 0,5 NTU oder kleiner 0,3 NTU.

**9.** Verfahren nach einem der vorhergehenden Ansprüche, bei dem das remineralisierte Wasser einen Langelier Sättigungsindex von -1 bis 2 aufweist, bevorzugt von -0,5 bis 0,5, am meisten bevorzugt von -0,2 bis 0,2.

**10.** Verfahren nach einem der vorhergehenden Ansprüche, bei dem das remineralisierte Wasser einen Schwemmstoffdichte-Index $SDI_{15}$ unter 5 aufweist, bevorzugt unter 4, und am meisten bevorzugt unter 3.

**11.** Verfahren nach einem der vorhergehenden Ansprüche, bei dem das remineralisierte Wasser einen Membranverschmutzungsindex $MFI_{0,45}$ unter 4 aufweist, bevorzugt unter 2,5, am meisten bevorzugt unter 2.

**12.** Verfahren nach einem der vorhergehenden Ansprüche, bei dem das Speisewasser entsalztes Meerwasser, Brackwasser oder Salzwasser, behandeltes Abwasser oder natürliches Wasser, wie Grundwasser, Oberflächenwasser oder Regenwasser ist.

**13.** Verfahren nach einem der vorhergehenden Ansprüche, bei dem das remineralisierte Wasser mit Speisewasser vermischt wird.

**14.** Verfahren nach einem der vorhergehenden Ansprüche, bei dem das Verfahren ferner einen Partikelentfernungsschritt umfasst.

**15.** Verfahren nach einem der vorhergehenden Ansprüche, bei dem das Verfahren ferner die Schritte umfasst:

d) Messen eines Parameterwertes des remineralisierten Wassers, wobei der Parameter ausgewählt ist aus der Gruppe umfassend Alkalinität, Gesamthärte, Leitfähigkeit, Calciumkonzentration, pH, $CO_2$-Konzentration, gesamte gelösten Feststoffe und Trübung des remineralisierten Wassers,
e) Vergleichen der gemessenen Parameterwerte mit einem vorgegebenen Parameterwert, und
f) Bereitstellen der Menge an injizierter Lösung, die von Calciumcarbonat stammt, auf der Basis der Differenz zwischen dem gemessenen und dem vorgegebenen Parameterwert.

**16.** Verfahren nach Anspruch 15, bei dem der vorgegebene Parameterwert ein pH-Wert ist, wobei der pH-Wert von 5,5 bis 9 beträgt, bevorzugt von 7 bis 8,5.

**17.** Verwendung einer Lösung, die von Calciumcarbonat stammt, zur Remineralisierung von Wasser, wobei die Lösung durch einen der folgenden Schritte zubereitet wurde:

A) Herstellen von einer wässrigen Calciumcarbonat-Suspension in einem ersten Schritt, und Einbringen von entweder: (i) einer Kohlenstoffdioxid erzeugenden Verbindung, (ii) einer Kohlenstoffdioxid erzeugenden Verbindung und einer Säure, oder (iii) einer Säure zu einer wässrigen Calciumcarbonat-Suspension in einem zweiten Schritt, oder
B) Einbringen in einem ersten Schritt von entweder: (i) einer Kohlenstoffdioxid erzeugenden Verbindung, (ii) einer Kohlenstoffdioxid erzeugenden Verbindung und einer Säure, oder (iii) einer Säure in das für die Herstellung der Lösung zu verwendende Wasser, und dann Einbringen von Calciumcarbonat, entweder in trockener Form oder als eine Suspension in einem zweiten Schritt in das Wasser, oder,

C) Einbringen einer Calciumcarbonat-Suspension und entweder: (i) einer Kohlenstoffdioxid erzeugenden Verbindung, (ii) einer Kohlenstoffdioxid erzeugenden Verbindung und einer Säure, oder (iii) einer Säure gleichzeitig,

wobei das für die Herstellung der wässrigen Lösung verwendete Calciumcarbonat eine gewichtsgemittelte Partikelgrösse $d_{50}$ von 0,1 bis 100 μm aufweist.

**18.** Verwendung nach Anspruch 17, bei der das remineralisierte Wasser ausgewählt ist aus Trinkwasser, Freizeitaktivitätenwasser, wie Wasser für Schwimmbäder, Industriewasser für Prozessanwendungen, Bewässerungswasser oder Wasser für wasserführende Schichten oder Versickerungsbrunnen.

## Revendications

**1.** Procédé de reminéralisation de l'eau comprenant les étapes consistant à :

a) fournir une eau d'alimentation,
b) fournir une solution aqueuse dérivée de carbonate de calcium, la solution aqueuse comprenant du carbonate de calcium dissout et des espèces réactionnelles de celui-ci, et la concentration en carbonate de calcium dans la solution étant de 0,1 à 1 g/L, et
c) combiner l'eau d'alimentation de l'étape a) et la solution aqueuse de l'étape b),

la solution aqueuse de l'étape b) ayant été préparée par l'une des étapes suivantes consistant à :

A) préparer une suspension aqueuse de carbonate de calcium dans une première étape, et introduire : (i) un composé produisant du dioxyde de carbone, (ii) un composé produisant du dioxyde de carbone et un acide ou (iii) un acide dans une suspension aqueuse de carbonate de calcium dans une seconde étape, ou
B) introduire dans une première étape : (i) un composé produisant du dioxyde de carbone, (ii) un composé produisant du dioxyde de carbone et un acide ou (iii) un acide dans l'eau à utiliser pour la préparation de la solution, et ensuite introduire du carbonate de calcium, sous forme anhydre ou sous forme de suspension dans une seconde étape dans l'eau, ou
C) introduire une suspension de carbonate de calcium et : (i) un composé produisant du dioxyde de carbone, (ii) un composé produisant du dioxyde de carbone et un acide ou (iii) un acide simultanément,

dans lequel le carbonate de calcium utilisé pour la préparation de la solution aqueuse de l'étape b) a une taille de particule médiane en poids $d_{50}$ de 0,1 à 100 μm.

**2.** Procédé selon la revendication 1, dans lequel la concentration en carbonate de calcium dans la solution est de 0,3 à 0,8 g/L, et de préférence de 0,5 à 0,7 g/L, par rapport au poids total de la solution.

**3.** Procédé selon l'une quelconque des revendications précédentes, dans lequel le carbonate de calcium utilisé pour la préparation de la solution aqueuse de l'étape b) a une taille de particule médiane en poids $d_{50}$ de 0,5 à 50 μm, de 1 à 15 μm, de préférence de 2 à 10 μm, de manière préférée entre toutes de 3 à 5 μm, ou le carbonate de calcium a une taille de particule médiane en poids $d_{50}$ de 1 à 50 μm, de 2 à 20 μm, de préférence de 5 à 15 μm, et de manière préférée entre toutes de 8 à 12 μm.

**4.** Procédé selon l'une quelconque des revendications précédentes, dans lequel le carbonate de calcium est un carbonate de calcium broyé, un carbonate de calcium précipité, ou un mélange de ceux-ci.

**5.** Procédé selon l'une quelconque des revendications précédentes, dans lequel l'eau reminéralisée obtenue a une concentration en calcium en tant que carbonate de calcium de 15 à 200 mg/L, de préférence de 30 à 150 mg/L, et de manière préférée entre toutes de 100 à 125 mg/L, ou de 15 à 100 mg/L, de préférence de 20 à 80 mg/L, et de manière préférée entre toutes de 40 à 60 mg/L.

**6.** Procédé selon l'une quelconque des revendications précédentes, dans lequel la solution de l'étape b) comprend en outre des minéraux contenant du magnésium, de potassium ou du sodium, de préférence le carbonate de magnésium, le carbonate de calcium et magnésium, par exemple, le calcaire dolomitique, la dolomite calcaire ou la dolomite à moitié calcinée, l'oxyde de magnésium tel que la dolomite calcinée, le sulfate de magnésium, l'hydrogénocarbonate de potassium ou l'hydrogénocarbonate de sodium.

**7.** Procédé selon la revendication 6, dans lequel l'eau reminéralisée obtenue a une concentration en magnésium de 5 à 25 mg/L, de préférence de 5 à 15 mg/L, et de manière préférée entre toutes de 8 à 12 mg/L.

**8.** Procédé selon l'une quelconque des revendications précédentes, dans lequel l'eau reminéralisée a une valeur de turbidité inférieure à 5,0 NTU, inférieure à 1,0 NTU, inférieure à 0,5 NTU, ou inférieure à 0,3 NTU.

**9.** Procédé selon l'une quelconque des revendications précédentes, dans lequel l'eau reminéralisée a un indice de saturation de Langelier de -1 à 2, de préférence de -0,5 à 0,5, de manière préférée entre toutes de -0,2 à 0,2.

**10.** Procédé selon l'une quelconque des revendications précédentes, dans lequel l'eau reminéralisée a un indice de densité de dépôt $SDI_{15}$ inférieur à 5, de préférence inférieur à 4, et de manière préférée entre toutes inférieur à 3.

**11.** Procédé selon l'une quelconque des revendications précédentes, dans lequel l'eau reminéralisée a un indice de colmatage de membrane $MFI_{0,45}$ inférieur à 4, de préférence inférieur à 2,5, de manière préférée entre toutes inférieur à 2.

**12.** Procédé selon l'une quelconque des revendications précédentes, dans lequel l'eau d'alimentation est de l'eau de mer dessalée, de l'eau saumâtre ou de la saumure, des eaux usées traitées ou de l'eau naturelle telle que de l'eau d'une nappe phréatique, de l'eau de surface ou de l'eau de pluie.

**13.** Procédé selon l'une quelconque des revendications précédentes, dans lequel l'eau reminéralisée est mélangée avec l'eau d'alimentation.

**14.** Procédé selon l'une quelconque des revendications précédentes, dans lequel le procédé comprend en outre une étape d'élimination de particules.

**15.** Procédé selon l'une quelconque des revendications précédentes, dans lequel le procédé comprend en outre les étapes consistant à :

d) mesurer une valeur de paramètre de l'eau reminéralisée, le paramètre étant choisi dans le groupe comprenant l'alcalinité, la dureté totale, la conductivité, la concentration en calcium, le pH, la concentration en $CO_2$, les solides totaux dissous et la turbidité de l'eau reminéralisée,
e) comparer la valeur de paramètre mesurée avec une valeur de paramètre prédéterminée, et
f) fournir la quantité de solution injectée dérivée de carbonate de calcium en fonction de la différence entre la valeur de paramètre mesurée et la valeur de paramètre prédéterminée.

**16.** Procédé selon la revendication 15, dans lequel la valeur de paramètre prédéterminée est une valeur de pH, dans lequel la valeur de pH est de 5,5 à 9, de préférence de 7 à 8,5.

**17.** Utilisation d'une solution dérivée de calcium carbonate pour la reminéralisation de l'eau, dans laquelle la solution a été préparée par une des étapes suivantes consistant à :

A) préparer une suspension aqueuse de carbonate de calcium dans une première étape, et introduire : (i) un composé produisant du dioxyde de carbone, (ii) un composé produisant du dioxyde de carbone et un acide ou (iii) un acide dans une suspension aqueuse de carbonate de calcium dans une seconde étape, ou
B) introduire dans une première étape : (i) un composé produisant du dioxyde de carbone, (ii) un composé produisant du dioxyde de carbone et un acide ou (iii) un acide dans l'eau à utiliser pour la préparation de la solution, et ensuite introduire du carbonate de calcium, sous forme anhydre ou sous forme de suspension dans une seconde étape dans l'eau, ou
C) introduire une suspension de carbonate de calcium et : (i) un composé produisant du dioxyde de carbone, (ii) un composé produisant du dioxyde de carbone et un acide ou (iii) un acide simultanément,

dans laquelle le carbonate de calcium utilisé pour la préparation de la solution aqueuse a une taille de particule médiane en poids $d_{50}$ de 0,1 à 100 $\mu$m.

**18.** Utilisation selon la revendication 17, dans laquelle l'eau reminéralisée est choisie parmi l'eau potable, l'eau pour loisirs telle que l'eau pour les piscines, l'eau industrielle pour des applications de procédés, l'eau d'irrigation ou l'eau pour réservoir aquifère ou pour le rechargement de puits.

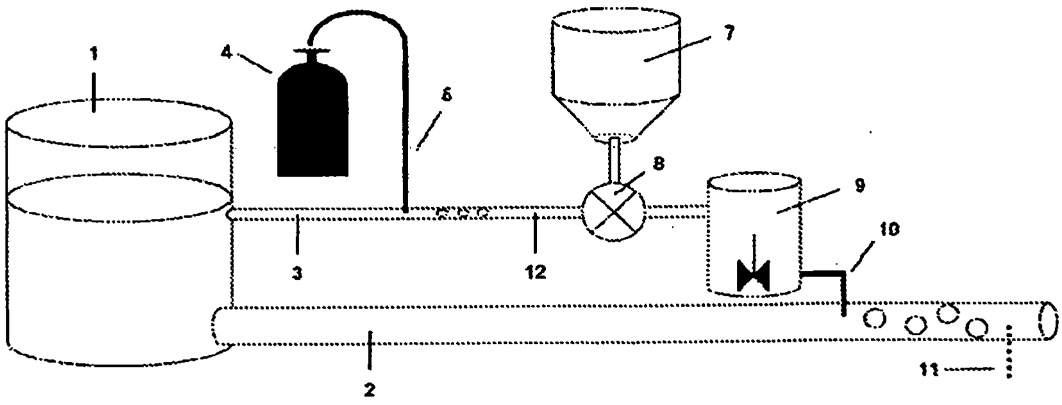


Figure 1

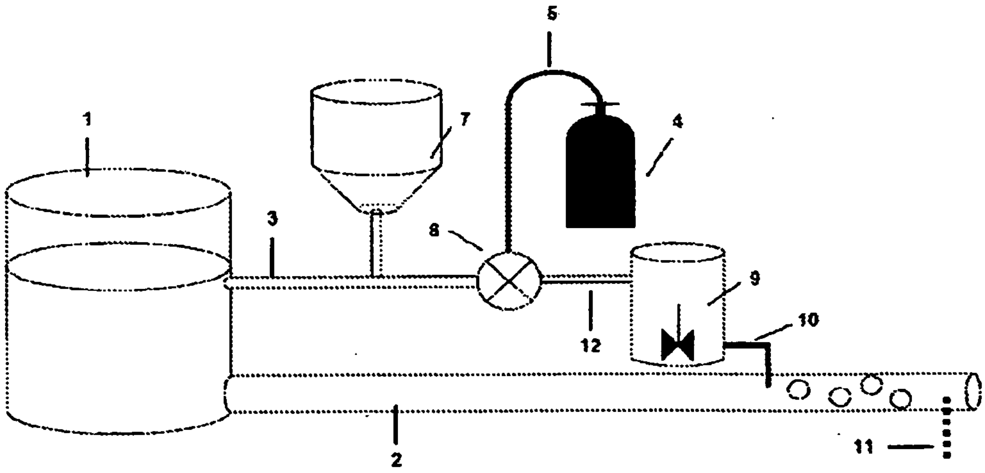


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7374694 B
- EP 0520826 A
- US 5914046 A
- EP 241817 A
- EP 1975310 A
- EP 1982759 A
- EP 1974807 A
- EP 1974806 A